# EUROPEAN PATENT APPLICATION

(11) **EP 4 253 008 A1**
(43) Date of publication of application: **04.10.2023**
(21) Application number: 21898181.9
(22) Date of filing: 30.11.2021
(51) Int. Cl.: B29C 64/268, B22F 10/366, B29C 64/153, B33Y 10/00, B33Y 50/02

(54) **THREE-DIMENSIONAL MODELING DEVICE AND THREE-DIMENSIONAL MODELING METHOD**

(30) Priority: 30.11.2020 JP 2020198791
(71) Applicant: IHI Corporation, Tokyo 135-8710 (JP)
(72) Inventor: NAGATA Yoshihiko, Tokyo 135-8710 (JP); MOHARA Guillaume, Tokyo 135-8710 (JP); MOURI Masashi, Tokyo 135-8710 (JP)
(74) Representative: MERH-IP Matias Erny Reichl Hoffmann Patentanwälte PartG mbB
(86) International application number: PCT/JP2021/043789
(87) International publication number: WO 2022/114210

(57) **Abstract**

A three-dimensional modeling device models a three-dimensional object by irradiating the powdered material with an electron beam to melt and stack the powdered material. The three-dimensional modeling device includes a beam emitting unit that irradiates a powdered material with the electron beam by emitting the electron beam. The beam emitting unit irradiates the powdered material with the electron beam while scanning the electron beam in a direction orthogonal to a contour line of a modeling region in at least a contour portion of the modeling region that is a cross-section of the object.

## Description

### Technical Field

The present disclosure describes a three-dimensional modeling device and a three-dimensional modeling method for modeling a three-dimensional object.

### Background Art

For example, a device and a method for modeling a three-dimensional object described in U.S. Patent No. 5155324 are known as a three-dimensional modeling device and a three-dimensional modeling method in the related art. According to this device and the method, the powdered material is irradiated with a laser beam to sinter powdered material and to stack the sintered powdered material. An irradiation pattern of the beam adopted in the device and the method includes a pattern along a contour of a cross-section (contour), and a pattern that fills the inside of the contour (hatching). In this device and the method, laser beam is first irradiated along a contour line of the cross-section of the object. Next, the object is modeled by irradiating the laser beam to a portion inside the contour line while reciprocating the laser beam along a certain direction.

### Citation List

### Patent Literature

Patent Literature 1: U.S. Patent No. 5155324

### Summary of Invention

### Technical Problem

In such a three-dimensional modeling device and method, it is difficult to efficiently perform the modeling of the object. When the beam irradiation of a cross-section of the object is divided into irradiation of a pattern along the contour of the cross-section and irradiation of a pattern that fills the inside of the contour, it is necessary to change the intensity and the scanning speed of the beam for each of the patterns. For example, the beam irradiation along the contour is performed by scanning with a weak beam at a low speed. The beam irradiation of the inside is performed by scanning with a strong beam at a high speed. At this time, since the beam irradiation along the contour requires a long time, the modeling of the object cannot be efficiently performed.

Therefore, the present disclosure describes a three-dimensional modeling device and a three-dimensional modeling method that can efficiently perform the modeling of an object.

### Solution to Problem

According to one aspect of the present disclosure, there is provided a three-dimensional modeling device that models a three-dimensional object by irradiating a modeling material with an energy beam to model and stack the modeling material. The three-dimensional modeling device includes a beam emitting unit that emits the energy beam and that irradiates the modeling material with the energy beam. The beam emitting unit is configured to irradiate the modeling material with the energy beam while scanning the energy beam in a direction orthogonal to a contour line of the modeling region in at least a contour portion of a modeling region that is a cross-section of the object. The three-dimensional modeling device irradiates the modeling material with the energy beam while scanning the energy beam in the direction orthogonal to the contour line of the modeling region in the contour portion of the modeling region. As a result, beam irradiation in which the energy beam is scanned at a high speed can be performed on the contour portion. For this reason, the beam irradiation in the contour portion can be completed in a short time. Therefore, the three-dimensional modeling device can efficiently model the object.

According to one aspect of the present disclosure, the beam emitting unit of the three-dimensional modeling device may irradiate the modeling material with the energy beam while scanning the energy beam along a certain direction in an inner portion formed inside the contour portion of the modeling region. In this case, the modeling material is irradiated with the energy beam while scanning the energy beam along the certain direction in the inner portion of the modeling region. As a result, the beam irradiation in the inner portion can be completed in a short time. Therefore, the modeling of the object can be performed in a short time.

According to one aspect of the present disclosure, the beam emitting unit of the three-dimensional modeling device may irradiate a plurality of irradiation paths set in the contour portion with the energy beam. The beam emitting unit may irradiate another irradiation path with the energy beam by skipping over the adjacent irradiation path after irradiating the irradiation path with the energy beam. In this case, the irradiation path is irradiated with the energy beam, then the adjacent irradiation path is skipped over, and another irradiation path is irradiated with the energy beam. As a result, the concentration of heat caused by irradiation with the energy beam can be suppressed. Therefore, inappropriate modeling of the object can be suppressed.

According to one aspect of the present disclosure, the beam emitting unit of the three-dimensional modeling device may irradiate a plurality of irradiation paths set in the contour portion with the energy beam. After irradiating the irradiation path with the energy beam, the beam emitting unit may provide an idle time and then irradiate another irradiation path with the energy beam by skipping over the adjacent irradiation path, or irradiate the adjacent irradiation path with the energy beam. In this case, the idle time is provided for the irradiation with the energy beam. As a result, the concentration of heat caused by irradiation with the energy beam can be suppressed. Therefore, inappropriate modeling of the object can be suppressed.

According to one aspect of the present disclosure, the beam emitting unit of the three-dimensional modeling device may irradiate a plurality of irradiation paths set in the contour portion with the energy beam. The beam emitting unit may irradiate each of the plurality of irradiation paths with the energy beam in the same direction. In this case, the energy beam is irradiated in the same direction for each of the irradiation paths. As a result, the concentration of heat caused by irradiation with the energy beam can be suppressed. Therefore, inappropriate modeling of the object can be suppressed.

According to one aspect of the present disclosure, there is provided a three-dimensional modeling method for modeling a three-dimensional object by irradiating a modeling material with an energy beam to melting and stack the modeling material. The three-dimensional modeling method includes an irradiation step of emitting the energy beam. In the irradiation step, the energy beam is irradiated to the modeling material while scanning the energy beam in a direction orthogonal to a contour line of a modeling region in at least a contour portion of the modeling region that is a cross-section of the object. According to the three-dimensional modeling method, the modeling material is irradiated with the energy beam while scanning the contour portion of the modeling region with the energy beam in the direction orthogonal to the contour line of the modeling region. As a result, beam irradiation can be performed by scanning the contour portion with the energy beam at a high speed. For this reason, the beam irradiation of the contour portion can be completed in a short time. Therefore, the object can be efficiently modeled.

### Effects of Invention

The three-dimensional modeling device and the three-dimensional modeling method of the present disclosure can efficiently perform the modeling of the object.

### Brief Description of Drawings

FIG. 1 is a schematic configuration view of a three-dimensional modeling device according to an embodiment of the present disclosure.
FIG. 2 is a view for describing beam irradiation in the three-dimensional modeling device of FIG. 1.
FIG. 3 is a view for describing beam irradiation in the three-dimensional modeling device of FIG. 1.
FIG. 4 is a view for describing beam irradiation in the three-dimensional modeling device of FIG. 1.
FIG. 5 is a flowchart illustrating operation of the three-dimensional modeling device and a three-dimensional modeling method which are the embodiment of the present disclosure.
FIG. 6 is a view for describing beam irradiation according to a modification example of the three-dimensional modeling device of FIG. 1.

FIG. 7 is a view for describing beam irradiation according to a modification example of the three-dimensional modeling device of FIG. 1.

### Description of Embodiments

Hereinafter, an embodiment of the present disclosure will be described with reference to the drawings. It should be noted that in the description of the drawings, the same reference signs are assigned to the same elements and duplicate descriptions will be omitted.

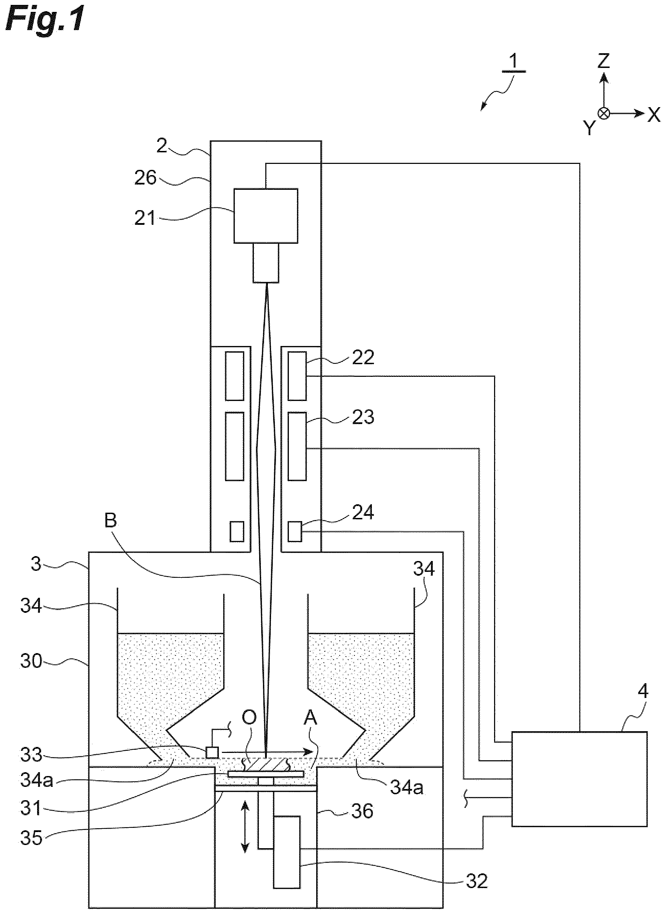

FIG. 1 is a schematic configuration view of a three-dimensional modeling device according to an embodiment of the present disclosure. A three-dimensional modeling device 1 melts a powdered material A by irradiating the powdered material A with an electron beam B. Then, the three-dimensional modeling device 1 stacks the powdered material A that has solidified after being melted. As a result, a three-dimensional object O is modeled. The three-dimensional modeling device 1 uses powder bed fusion (PBF). The three-dimensional modeling device 1 uses the electron beam B as an energy beam. The three-dimensional modeling device 1 models the object O through electron beam melting (EBM). The powdered material A is a modeling material for modeling an object. The powdered material A is composed of a large number of powder bodies. For example, a metal powder is used as the powdered material A. As the powdered material A, granules having a larger grain size than that of powder may be used as long as the granules can be melted and solidified by irradiation with the electron beam B. The electron beam B is an energy beam for melting the powdered material A.

The three-dimensional modeling device 1 includes a beam emitting unit 2, a modeling unit 3, and a control unit 4. The beam emitting unit 2 emits the electron beam B to the powdered material A of the modeling unit 3. Namely, the beam emitting unit 2 melts the powdered material A. The electron beam B is formed by the linear motion of electrons. For example, the beam emitting unit 2 performs preliminary heating of the powdered material A by irradiating the powdered material A with the electron beam B. Next, the beam emitting unit 2 melts the powdered material A by irradiating the powdered material A with the electron beam B. As a result, the modeling of the three-dimensional object O is performed.

The beam emitting unit 2 includes, for example, an electron gun unit 21, an aberration coil 22, a focus coil 23, and a deflection coil 24. The electron gun unit 21 is electrically connected to the control unit 4. The electron gun unit 21 operates upon receiving a control signal from the control unit 4. The electron gun unit 21 emits the electron beam B. The electron gun unit 21 is provided, for example, to emit the electron beam B downward. The aberration coil 22 is electrically connected to the control unit 4. The aberration coil 22 operates upon receiving a control signal from the control unit 4. The aberration coil 22 is installed around the electron beam B emitted from the electron gun unit 21. The aberration coil 22 corrects an aberration of the electron beam B. The focus coil 23 is electrically connected to the control unit 4. The focus coil 23 operates upon receiving a control signal from the control unit 4. The focus coil 23 is installed around the electron beam B emitted from the electron gun unit 21. The focus coil 23 converges the electron beam B. The focus coil 23 adjusts a focus state at the irradiation position of the electron beam B. The deflection coil 24 is electrically connected to the control unit 4. The deflection coil 24 operates upon receiving a control signal from the control unit 4. The deflection coil 24 is installed around the electron beam B emitted from the electron gun unit 21. The deflection coil 24 adjusts the irradiation position of the electron beam B according to the control signal. Since the deflection coil 24 performs electromagnetic beam deflection, the scanning speed of the electron beam B during irradiation is a higher speed compared to mechanical beam deflection. The electron gun unit 21, the aberration coil 22, the focus coil 23, and the deflection coil 24 are installed, for example, inside a column 26 having a tubular shape. It should be noted that the installation of the aberration coil 22 may be omitted. In addition, the beam emitting unit 2 may have a configuration different from the above-described configuration as long as the beam emitting unit 2 can emit the electron beam B.

The modeling unit 3 is a portion that models the desired object O. The modeling unit 3 is provided, for example, below the beam emitting unit 2. The modeling unit 3 includes a chamber 30 having a box shape. The modeling unit 3 includes a plate 31, an elevator 32, a powder supply mechanism 33, and a hopper 34 that are disposed inside the chamber 30. The chamber 30 is coupled to the column 26. An internal space of the chamber 30 communicates with an internal space of the column 26 in which the electron gun unit 21 is disposed.

The plate 31 supports the object O to be molded. The object O is modeled on the plate 31. The plate 31 supports the object O to be molded. For example, a circular plate-shaped plate is used as the plate 31. The plate 31 is disposed on an extension line of an emission direction of the electron beam B. The plate 31 is provided, for example, in a horizontal direction. The plate 31 is disposed to be supported by an elevation stage 35 installed below the plate 31. The plate 31 moves in an up-down direction together with the elevation stage 35. The elevator 32 is a device that raises and lowers the elevation stage 35 and the plate 31. The elevator 32 is electrically connected to the control unit 4. The elevator 32 operates upon receiving a control signal from the control unit 4. For example, the elevator 32 moves the plate 31 upward together with the elevation stage 35 at the beginning of the modeling of the object O. The elevator 32 lowers the plate 31 each time the powdered material A that has solidified after being melted on the plate 31 is stacked. Any mechanism may be used as the elevator 32 as long as the mechanism can raise and lower the plate 31.

The plate 31 is disposed inside a modeling tank 36. The modeling tank 36 is a containing body installed at a lower portion inside the chamber 30. The modeling tank 36 is formed in, for example, a cylindrical shape. The modeling tank 36 extends in a movement direction of the plate 31. The modeling tank 36 is formed with a circular cross-section concentric with the plate 31. The elevation stage 35 is formed to match an inner shape of the modeling tank 36. When the inner shape of the modeling tank 36 is a circular shape in a horizontal cross-sectional view, the outer shape of the elevation stage 35 is also a circular shape. As a result, the powdered material A supplied to the modeling tank 36 is easily prevented from leaking below the elevation stage 35. In order to prevent the powdered material A from leaking below the elevation stage 35, a seal material may be provided on an outer edge portion of the elevation stage 35. The shape of the modeling tank 36 is not limited to a cylindrical shape. The shape of the modeling tank 36 may be an angular tubular shape with a rectangular cross-section.

The powder supply mechanism 33 supplies the powdered material A onto the plate 31, and levels the surface of the powdered material A. The powder supply mechanism 33 functions as a recoater. For example, a rod-shaped or plate-shaped member is used as the powder supply mechanism 33. The powder supply mechanism 33 supplies the powdered material A to an irradiation region of the electron beam B, and evenly levels the powdered material A by moving in the horizontal direction. The movement of the powder supply mechanism 33 is controlled by an actuator and a mechanism (not illustrated). A mechanism other than the powder supply mechanism 33 can be used as the mechanism that levels the powdered material A. The hopper 34 is a container that contains the powdered material A. A discharge port 34a that discharges the powdered material A is formed in a lower portion of the hopper 34. The powdered material A discharged from the discharge port 34a flows onto the plate 31. Alternatively, the powdered material A discharged from the discharge port 34a is supplied onto the plate 31 by the powder supply mechanism 33. The plate 31, the elevator 32, the powder supply mechanism 33, and the hopper 34 are installed inside the chamber 30. The inside of the chamber 30 is in a vacuum or approximately vacuum state. A mechanism other than the powder supply mechanism 33 and the hopper 34 can be used as the mechanism that supplies the powdered material A onto the plate 31 in a layered form.

The control unit 4 is an electronic control unit that performs overall control of the three-dimensional modeling device 1. The control unit 4 includes, for example, a computer including a CPU, a ROM, and a RAM. The control unit 4 performs elevation control of the plate 31, operation control of the powder supply mechanism 33, emission control of the electron beam B, and operation control of the deflection coil 24. The control unit 4 causes the elevator 32 to operate by outputting a control signal to the elevator 32 as the elevation control of the plate 31. As a result, the position in the up-down direction of the plate 31 is adjusted. The control unit 4 causes the powder supply mechanism 33 to operate before the emission of the electron beam B, as the operation control of the powder supply mechanism 33. As a result, the powdered material A is supplied onto the plate 31, and the powdered material A is evenly leveled. The control unit 4 outputs a control signal to the electron gun unit 21 as the emission control of the electron beam B. As a result, the electron beam B is emitted from the electron gun unit 21.

The control unit 4 outputs a control signal to the deflection coil 24 as the operation control of the deflection coil 24. As a result, the irradiation position of the electron beam B is controlled. For example, when the preliminary heating of the powdered material A is performed, the control unit 4 outputting a control signal to the deflection coil 24 of the beam emitting unit 2 is to irradiate the plate 31 with the electron beam B while scanning the plate 31 with the electron beam B. When the modeling of the object O is performed, the control unit 4 output a control signal to the deflection coil 24 of the beam emitting unit 2 to irradiate the powdered material A on the plate 31 with the electron beam B while scanning the powdered material A with the electron beam B.

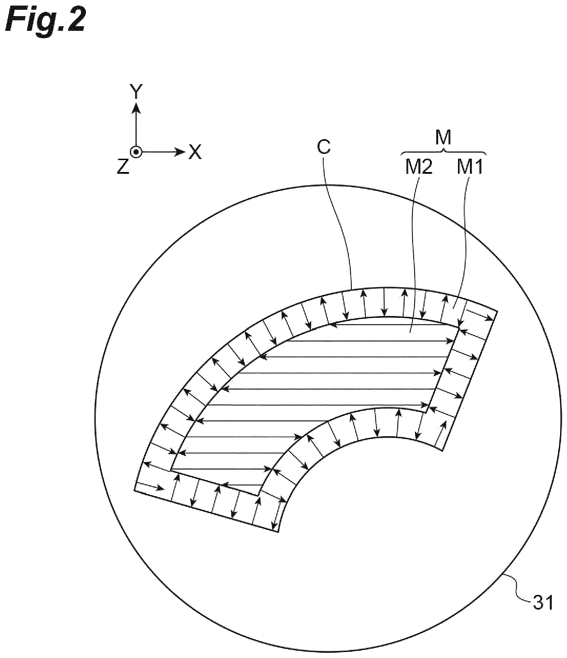

FIG. 2 is a view of the plate 31 when viewed from above. FIG. 2 illustrates the irradiation of the powdered material A with the electron beam B. In FIG. 2, a modeling region M is set within the range of the plate 31. The modeling region M is a region on a cross-section of the object O. The modeling region M is a region to be irradiated with the electron beam B when the object O is modeled. Arrows in the modeling region M indicate irradiation paths and irradiation directions of the electron beam B. For example, the irradiation paths are linearly set. In FIG. 2, for convenience of description, the illustration of the powdered material A laid on the plate 31 is omitted.

The modeling region M includes a contour portion M1 and an inner portion M2. The contour portion M1 is a region in the vicinity of a contour line C of the modeling region M. For example, the contour portion M1 is a region from the contour line C to a predetermined distance inward. The contour portion M1 extends along the entire range of the contour line C. The contour portion M1 is a region inside the entire range of the contour line C. However, in the contour portion M1, when the contour line C has a partial protrusion or depression, the length of the predetermined distance at the portion may be changed. In the contour portion M1, when the contour line C has a partial protrusion or depression, the contour portion M1 may be partially omitted in that portion. The inner portion M2 is a central region set inside the contour portion M1 within the modeling region M.

A plurality of irradiation paths are set in the contour portion M1 and the inner portion M2. An irradiation pattern of the electron beam B on the contour portion M1 is different from an irradiation pattern of the electron beam B on the inner portion M2. In the contour portion M1, the irradiation paths are set in a direction orthogonal to the contour line C of the modeling region M. The contour portion M1 is irradiated with the electron beam B while being scanned with the electron beam B in the direction orthogonal to the contour line C. Namely, in the contour portion M1, the plurality of irradiation paths are set in the direction orthogonal to the contour line C. As a result, irradiation with the electron beam B is sequentially performed along each of the irradiation paths. At this time, in a case where the contour line C is curved, the scanning direction of the electron beam B differs depending on the irradiation position. Namely, in a case where the contour line C is curved, when the beam irradiation is sequentially performed along the irradiation paths, the irradiation paths change in direction. As a result, the scanning direction of the electron beam B changes. It should be noted that even when the contour line C is curved, the plurality of irradiation paths may be set such that the irradiation paths are parallel without changing the directions of the adjacent irradiation paths.

On the other hand, in the inner portion M2, the irradiation paths are set along a certain direction. As a result, irradiation with the electron beam B is performed while performing scanning with the electron beam B along the certain direction. For example, in the inner portion M2, the irradiation paths are set along an X direction of an X-Y coordinate system set on the plate 31. As a result, the electron beam B is irradiated while being scanned along the irradiation paths. In the inner portion M2, the electron beam B is scanned while reciprocating the electron beam B along the certain direction. As a result, irradiation with the electron beam B can be performed in a short time. In the contour portion M1, the electron beam B is scanned while reciprocating the electron beam B in the direction orthogonal to the contour line C. As a result, irradiation with the electron beam B can be performed in a short time.

In FIG. 2, the electron beam B is scanned in the direction orthogonal to the contour line C of the modeling region M in the contour portion M1. As a result, irradiation with the electron beam B is performed by reciprocating the electron beam B in the direction orthogonal to the contour line C. The orthogonal direction also includes an approximately orthogonal direction. For example, scanning with the electron beam B may be performed at an angle of 90 degrees with respect to the contour line C. Scanning with the electron beam B may be performed at an angle ranging from 45 degrees to 135 degrees with respect to the contour line C. Even when beam irradiation is performed in approximately orthogonal directions, irradiation with the electron beam B can be performed in a short time by performing scanning through sequentially reciprocating the electron beam B in parallel directions or approximately parallel directions.

Here, it is assumed that the contour portion M1 is irradiated with the electron beam B by moving the irradiation position along the contour line C. In this case, it is difficult to perform scanning with the electron beam B while reciprocating the electron beam B. When the contour portion M1 is modeled by being irradiated parallel to the contour line C with the electron beam B, a beam condition that prioritizes the surface roughness of the object O is used instead of a beam condition that prioritizes irradiation speed. In this case, irradiation with the electron beam B is performed while moving the weak electron beam B parallel to the contour line C at a low speed. For this reason, the beam irradiation of the contour portion M1 requires a lot of time. As a result, the object O cannot be efficiently modeled. The intensity or irradiation movement speed of the electron beam B on the contour portion M1 needs to be changed for the inner portion M2. Therefore, changing irradiation control results in time loss, the object O cannot be efficiently modeled.

On the other hand, the three-dimensional modeling device 1 of the present disclosure scans the contour portion M1 with the electron beam B in the direction orthogonal to the contour line C of the modeling region M. As a result, the irradiation of the contour portion M1 with the electron beam B can be completed in a short time. The inner portion M2 can be irradiated with the electron beam B without changing the intensity and the scanning speed of the electron beam B. As a result, the modeling of the object O can be efficiently performed. At this time, the intensity and the scanning speed of the electron beam B with which the contour portion M1 is irradiated are the same as the intensity and the scanning speed of the electron beam B with which the inner portion M2 is irradiated. Being the same in the intensity and the scanning speed of the electron beam B also includes being approximately the same. Namely, if the intensity and the scanning speed are approximately the same to the extent that changing irradiation control results in almost no time loss, the object O can be efficiently modeled.

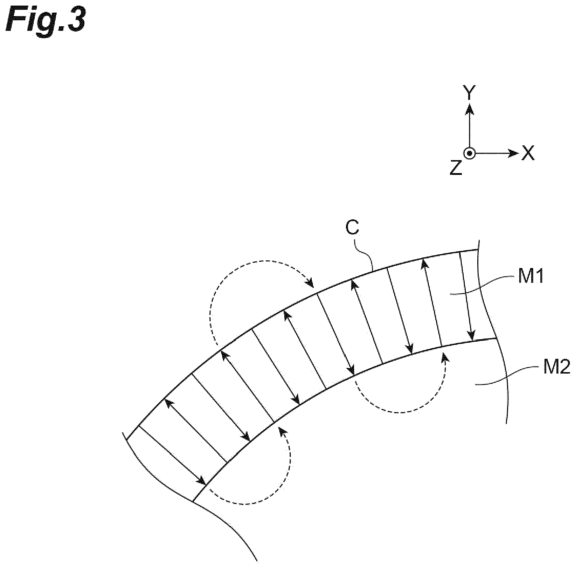

FIG. 3 illustrates one example of irradiation with the electron beam B. The contour portion M1 may be irradiated with the electron beam B by sequentially performing irradiation with the electron beam B along the adjacent irradiation path after performing irradiation with the electron beam B along the irradiation path. As illustrated in FIG. 3, the contour portion M1 may be irradiated with the electron beam B by performing irradiation with the electron beam B along the irradiation path, then skipping over the adjacent irradiation path, and performing irradiation with the electron beam B along another irradiation path. Such irradiation is referred to as "skip scanning". FIG. 3 illustrates a case where two irradiation paths are skipped over and irradiation with the electron beam B is performed. It should be noted that the number of the irradiation paths that are skipped over may be other than two. Namely, it is acceptable if irradiation with the electron beam B is performed along all the irradiation paths finally set in the contour portion M1 by irradiation with the electron beam B which adopts skip scanning. According to such irradiation with the electron beam B, it is possible to generate an appropriate time lag from when the powdered material A is melted by irradiation with the electron beam B along the irradiation path until the powdered material A on the adjacent irradiation path is melted. As a result, the surface roughness of the object O to be modeled can be improved. Namely, according to the skip scanning, beam irradiation is performed on the irradiation paths separated from each other. As a result, since heat is dispersed, the modeling of the object O can be appropriately performed. Particularly, in the contour portion M1 having a belt shape, when scanning with the electron beam B is performed along a width direction of the contour portion M1, heat is likely to concentrate due to irradiation with the electron beam B. On the other hand, according to the skip scanning, the concentration of heat can be suppressed. Therefore, the object O can be appropriately modeled.

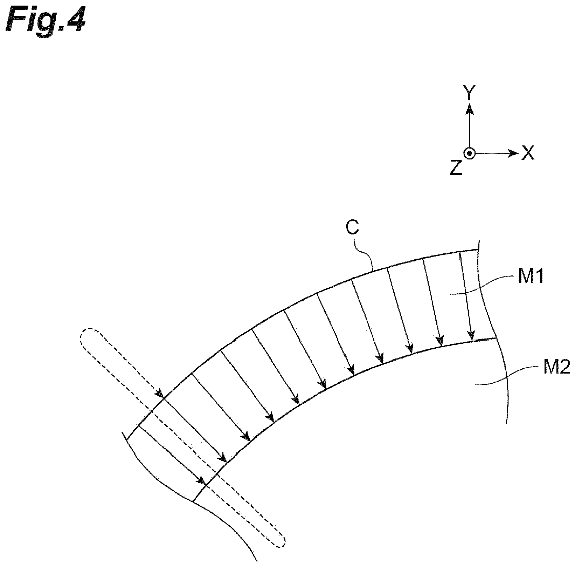

FIG. 4 illustrates a modification example of irradiation with the electron beam B. In FIG. 2, in the contour portion M1, the irradiation paths are folded back and the adjacent irradiation paths are irradiated. As illustrated in FIG. 4, the irradiation directions for all the irradiation paths may be unified in the same direction. For example, as illustrated in FIG. 4, when irradiation with the electron beam B is performed, the irradiation direction may be directed from the contour line C toward the inside for each of the irradiation paths of the contour portion M1. In this case, after beam irradiation along an irradiation path is completed, the beam irradiation of the next irradiation path is not started immediately after the irradiation path is folded back. After returning to the contour line C, the beam irradiation of the next irradiation path is started. As a result, the concentration of heat at a folded location of the irradiation position can be avoided. In addition, it is possible to generate an appropriate time lag from when the powdered material A is melted by irradiation with the electron beam B along the irradiation path until the powdered material A is melted by irradiation with the electron beam B along the adjacent irradiation path. As a result, the surface roughness of the object O to be modeled can be improved. Namely, beam irradiation along the adjacent irradiation path is not immediately performed. Therefore, since heat is dispersed, the modeling of the object O can be appropriately performed. It should be noted that in FIG. 4, irradiation with the electron beam B is performed from the outside in the vicinity of the contour line C toward the inside. Irradiation with the electron beam B may be performed from the inside toward the outside toward the contour line C. As illustrated in FIG. 3, irradiation with the electron beam B may be performed while applying skip scanning. Particularly, in the contour portion M1 having a belt shape, when scanning with the electron beam B is performed along the width direction of the contour portion M1, heat is likely to concentrate due to irradiation with the electron beam B. On the other hand, the concentration of heat can be suppressed by setting the irradiation directions of the electron beam B to be the same. As a result, the object O can be appropriately modeled.

As illustrated in FIG. 4, an idle time from when the powdered material A is melted by irradiation with the electron beam B along the irradiation path until the powdered material A is melted by irradiation with the electron beam B along the next irradiation path may be provided. The idle time is a time during which it is considered that the powdered material A is not substantially irradiated with the electron beam B. For example, in FIG. 4, during the idle time, when a path indicated by a dashed line is scanned, the output of the electron beam B is stopped. Alternatively, during the idle time, when the path indicated by a dashed line is scanned, the focus of the electron beam B is shifted. As a result, since energy received by the powdered material A is substantially weakened, it can be considered that irradiation with the electron beam B is not properly performed. The idle time is set based on the degree of the concentration of heat by irradiation with the electron beam B. In this way, by providing the idle time for the irradiation with the electron beam B, heat can be dispersed. As a result, the modeling of the object O can be appropriately performed. It should be noted that in FIG. 4, after the powdered material A is melted by irradiation with the electron beam B along the irradiation path, irradiation with the electron beam B is performed along the adjacent irradiation path. For example, the adjacent irradiation path may be skipped over and irradiation with the electron beam B may be performed along another irradiation path.

In FIG. 1, when the object O is modeled, the control unit 4 uses, for example, three-dimensional computer-aided design (CAD) data of the object O to be modeled. The three-dimensional CAD data of the object O is shape data of the object O, which is input in advance. The control unit 4 generates two-dimensional slice data based on the three-dimensional CAD data. The slice data is, for example, data of horizontal cross-sections of the object O to be modeled. The slice data is a collection of a large number of data corresponding to up and down positions. The control unit 4 sets the modeling region M in which the powdered material A is irradiated with the electron beam B, based on the slice data. Further, the control unit 4 sets the contour portion M1 and the inner portion M2. The control unit 4 sets irradiation paths and irradiation directions for the contour portion M1 and the inner portion M2. The setting of the modeling region M, the contour portion M1, the inner portion M2, the irradiation paths, and the irradiation directions is performed for each slice data.

When the object O is modeled, the control unit 4 outputs a control signal to the deflection coil 24 according to setting data including the modeling region M, the contour portion M1, the inner portion M2, the irradiation paths, and the irradiation directions. Namely, the control unit 4 outputs a control signal to the deflection coil 24 of the beam emitting unit 2. As a result, the modeling region M corresponding to the shape of the object is irradiated with the electron beam B.

Next, the operation of the three-dimensional modeling device 1 and a three-dimensional modeling method of the present disclosure will be described.

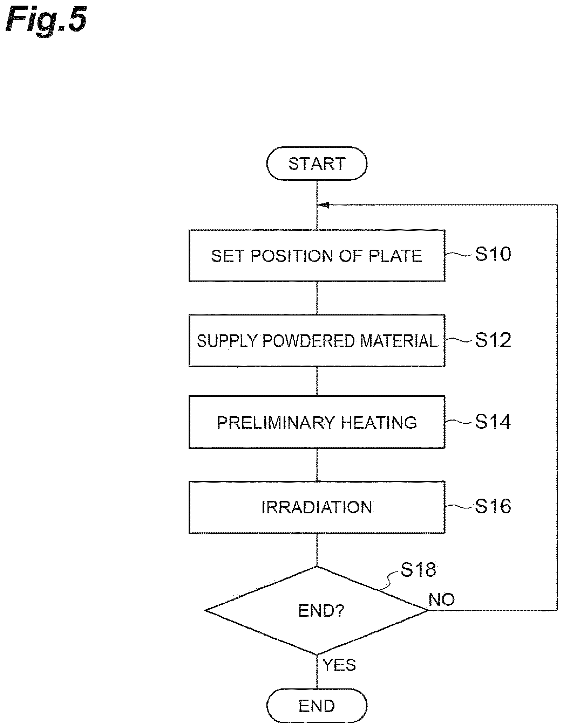

FIG. 5 is a flowchart illustrating the operation of the three-dimensional modeling device 1 and the three-dimensional modeling method of the present disclosure. A series of control processes in FIG. 5 are performed, for example, by the control unit 4.

First, as illustrated in step S10 of FIG. 5, the setting of the position of the plate 31 is performed. Hereinafter, step S10 is simply referred to as "S10". The same applies to the following steps. At the beginning of the modeling of the object O, the position of the plate 31 is set to an upper position. Then, as the modeling of the object O progresses, the position of the plate 31 gradually moves downward. In FIG. 1, the control unit 4 outputs an operation signal to the elevator 32 to cause the elevator 32 to operate. Accordingly, the elevator 32 operates, so that the elevation stage 35 and the plate 31 are raised and lowered. As a result, the position of the plate 31 is set.

The processing proceeds to S12 in FIG. 5. In S12, the supply of the powdered material A is performed. The supply of the powdered material A is a process of supplying the powdered material A to an irradiation region R of the electron beam B and evenly leveling the powdered material A. For example, in FIG. 1, the control unit 4 outputs an operation signal to an actuator (not illustrated) to operate the powder supply mechanism 33. Accordingly, the powder supply mechanism 33 moves in the horizontal direction, so that the powdered material A is supplied onto the plate 31, and the powdered material A is evenly leveled.

The processing proceeds to S14 in FIG. 5. In S14, a preliminary heating process is performed. The preliminary heating process is a process of heating the powdered material A in advance before the modeling of the object O is performed. The preliminary heating is also referred to as preheating. The preliminary heating is a process of heating the powdered material A at a temperature lower than the melting point of the powdered material A before the object O is modeled. The powdered material A is heated through preliminary heating to undergo preliminary sintering. As a result, the accumulation of negative charges in the powdered material A by irradiation with the electron beam B is suppressed. Therefore, it is possible to suppress a smoke phenomenon in which the powdered material A floats up due to the scattering of the powdered material A when irradiation with the electron beam B is performed. The control unit 4 outputs a control signal to the beam emitting unit 2 to emit the electron beam B from the electron gun unit 21 and to operate the deflection coil 24. As a result, the irradiation position of the electron beam B is controlled. Accordingly, as illustrated in FIG. 2, the powdered material A on the plate 31 is irradiated with the electron beam B, and as a result, the powdered material A is heated.

Then, the processing proceeds to S16 in FIG. 5. In S16 that is an irradiation step, an irradiation process is performed. The irradiation process is a modeling process of performing the modeling of the object O by irradiating the modeling region M with the electron beam B. For example, the control unit 4 generates two-dimensional slice data based on three-dimensional CAD data of the object O to be modeled. The control unit 4 determines the modeling region M, the contour portion M1, the inner portion M2, irradiation paths, and irradiation directions in which the powdered material A is irradiated with the electron beam B, based on the slice data. The control unit 4 causes the beam emitting unit 2 to perform irradiation with the electron beam B according to the set irradiation paths and irradiation directions. In the irradiation process of S16, some layers forming the object O are modeled.

Specifically, as illustrated in FIG. 2, the modeling region M is set within the range of the plate 31. Next, the contour portion M1 and the inner portion M2 are set in the modeling region M. Then, the irradiation paths and the irradiation directions of the electron beam B are set in each of the contour portion M1 and the inner portion M2. As described above, the contour portion M1 and the inner portion M2 have different irradiation patterns of the electron beam B. Namely, the contour portion M1 is irradiated with the electron beam B such that the contour portion M1 is scanned with the electron beam B in a direction orthogonal to the contour line C of the modeling region M. On the on the other hand, the inner portion M2 is irradiated with the electron beam B such that the inner portion M2 is scanned with the electron beam B along a certain direction. FIG. 2 illustrates a case where irradiation with the electron beam B is performed such that scanning with the electron beam B is performed along the X direction of the X-Y coordinate system set on the plate 31. In the contour portion M1 and the inner portion M2, the irradiation paths adjacent to each other are parallel or approximately parallel. For this reason, scanning can be performed by reciprocating the electron beam B. As a result, the irradiation time of the electron beam B can be shortened. Irradiation with the electron beam B can be performed without changing the scanning speed from the scanning speed of the contour portion M1 to the scanning speed of the inner portion M2. Therefore, irradiation with the electron beam B can be efficiently performed, so that the irradiation process can be performed in a short time.

In the irradiation process, the contour portion M1 may be irradiated with the electron beam B while performing skip scanning on the irradiation paths as illustrated in FIG. 3. As illustrated in FIG. 4, irradiation with the electron beam B may be performed with the irradiation directions set to the same direction.

Then, the processing proceeds to S18 in FIG. 5. In S18, it is determined whether or not an end condition of the control processes is satisfied. A case where the end condition of the control processes is satisfied is, for example, a case where the molding of the desired three-dimensional object O is ended. Namely, the case is a case where the modeling of the object O is completed as a result of repeatedly performing the control processes from S10 to S16. On the other hand, a case where the end condition of the control processes is not satisfied is, for example, a case where the molding of the desired three-dimensional object O is not completed.

In S18, when it is determined that the end condition of the control processes is not satisfied, the processing returns to S10. On the other hand, in S18, when it is determined that the end condition of the control processes is satisfied, the series of control processes of FIG. 5 end.

Since the molten and solidified powdered material A is stacked by repeatedly performing the processes from S10 to S18 in FIG. 5, the object O is gradually formed. Then, the desired object O is finally molded.

According to the three-dimensional modeling device 1 and the three-dimensional modeling method of the present disclosure, in the contour portion M1 of the modeling region M, the powdered material A is irradiated with the electron beam B such that scanning with the electron beam B is performed in the direction orthogonal to the contour line C of the modeling region M. As a result, the object O can be molded while performing scanning with the electron beam B at a high speed. Therefore, the beam irradiation of the contour portion M1 of the modeling region M can be completed in a short time. As a result, the object O can be efficiently modeled in a short time. Therefore, the object O can be efficiently modeled.

According to the three-dimensional modeling device 1 and the three-dimensional modeling method of the present disclosure, in the contour portion M1 and the inner portion M2, beam irradiation with the electron beam B can be performed with the same intensity and scanning speed. For this reason, the contour portion M1 and the inner portion M2 can be irradiated with the electron beam B without changing the intensity and the scanning speed of the electron beam B. Therefore, the modeling of the object O can be efficiently performed.

The three-dimensional modeling device 1 and the three-dimensional modeling method of the present disclosure can model the satisfactory object O. For example, compared to when the contour portion M1 is irradiated parallel to the contour line C with the beam, the satisfactory object O with small surface roughness can be formed.

Specifically, an example in which the object O is modeled will be illustrated. According to each of the three-dimensional modeling device 1 and the three-dimensional modeling method of the present disclosure and a comparative example, the object O including a contour portion M1 with a width of 4 mm was modeled. Then, the objects O modeled by each of the methods were compared in a surface roughness. According to the three-dimensional modeling device 1 and the three-dimensional modeling method of the present disclosure, irradiation with the beam was performed in a direction orthogonal to the contour line C. In the comparative example, irradiation with the beam was performed in a direction parallel to the contour line C. The contour portion M1 with a width of 4 mm indicates that the distance from the contour line C is 4 mm. An arithmetic mean height was adopted as the surface roughness. An arithmetic mean height Sa was measured by an optical measuring instrument. A laser beam was used as the energy beam. According to the three-dimensional modeling device 1 and the three-dimensional modeling method of the present disclosure, the object O with a surface roughness of approximately Sa = 20 µm could be modeled. On the other hand, in the comparative example in which irradiation with the beam was performed in the direction parallel to the contour line C, only the object O with a surface roughness of approximately Sa = 30 µm could be modeled. According to the three-dimensional modeling device 1 and the three-dimensional modeling method of the present disclosure, modeling was performed with an electric current value of a laser set to 28 mA. On the other hand, in the comparative example in which irradiation with the beam was performed in the direction parallel to the contour line C, when the electric current value of the laser was lowered, the value of Sa decreased. However, in the comparative example, even when the electric current value of the laser was lowered to 10 mA, Sa was approximately 28 µm. In this way, it was found that the three-dimensional modeling device 1 and the three-dimensional modeling method of the present disclosure could model the satisfactory object O with small surface roughness.

In addition, according to the three-dimensional modeling device 1 and the three-dimensional modeling method of the present disclosure, in the inner portion M2 formed inside the contour portion M1 of the modeling region M, the powdered material A may be irradiated with the electron beam B while performing scanning with the electron beam B along a certain direction. The beam irradiation of the inner portion M2 can be performed in a short time by irradiating the powdered material A with the electron beam B while scanning the inner portion M2 with the electron beam B along the certain direction. As a result, the modeling of the object O can be performed in a short time.

According to the three-dimensional modeling device 1 and the three-dimensional modeling method of the present disclosure, the irradiation paths set in the contour portion M1 may be irradiated with the electron beam B. According to the three-dimensional modeling device 1 and the three-dimensional modeling method of the present disclosure, the adjacent irradiation path next to the irradiation path irradiated with the electron beam B may be skipped over, and irradiation with the electron beam B may be performed. In this case, the irradiation path adjacent to the irradiation path irradiated with the electron beam B is skipped over, and irradiation with the electron beam B is performed. As a result, the concentration of heat caused by irradiation with the electron beam B can be suppressed. For this reason, inappropriate modeling of the object O can be suppressed. Particularly, when the contour portion M1 has a belt shape and irradiation with the electron beam B is performed in the width direction of the contour portion M1, the concentration of heat can be suppressed. As a result, the object O can be appropriately modeled.

According to the three-dimensional modeling device 1 and the three-dimensional modeling method of the present disclosure, the irradiation paths set in the contour portion M1 may be irradiated with the electron beam B. According to the three-dimensional modeling device 1 and the three-dimensional modeling method of the present disclosure, irradiation with the electron beam B may be performed in the same direction for each of the irradiation paths. In this case, irradiation with the electron beam B is performed in the same direction for each of the irradiation paths. Therefore, the concentration of heat caused by irradiation with the electron beam B can be suppressed. As a result, inappropriate modeling of the object O can be suppressed. Particularly, when the contour portion M1 having a belt shape is irradiated with the electron beam B in the width direction of the contour portion M1, the concentration of heat can be suppressed. Therefore, the object O can be appropriately modeled.

The three-dimensional modeling device 1 and the three-dimensional modeling method of the present disclosure have been described above. The three-dimensional modeling device 1 and the three-dimensional modeling method of the present disclosure are not limited to the above-described embodiment. The three-dimensional modeling device 1 and the three-dimensional modeling method of the present disclosure can be implemented in various modification forms without departing from the concept of the appended claims.

For example, the case where the object O is modeled by irradiating the powdered material A with the electron beam B as an energy beam has been described. The powdered material A may be irradiated with a different type of energy beam than the electron beam B. For example, the object O may be modeled by irradiating the powdered material A with a laser beam as an energy beam. In this case, it is acceptable if the modeling of the object O is performed using a laser scan head, etc. which can irradiate the powdered material A with a laser beam, as the beam emitting unit 2.

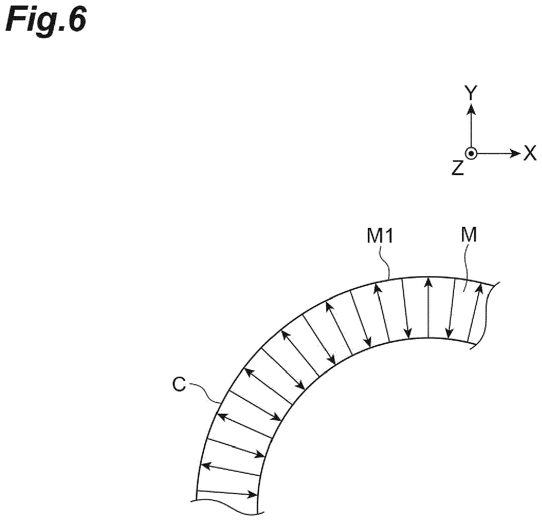

The case where the inner portion M2 is set inside the contour portion M1 in the modeling region M has been described. The setting of the inner portion M2 may be omitted. For example, the object O may be modeled by setting only the contour portion M1 for the entirety or a part of the modeling region M, and then performing an irradiation process. Specifically, as illustrated in FIG. 6, when the modeling region M includes a belt-shaped region, such as when the modeling region M has a ring shape, after only the contour portion M1 is set without setting the inner portion M2, beam irradiation may be performed. Even in this case, the same actions and effects as the above-described embodiment can be obtained.

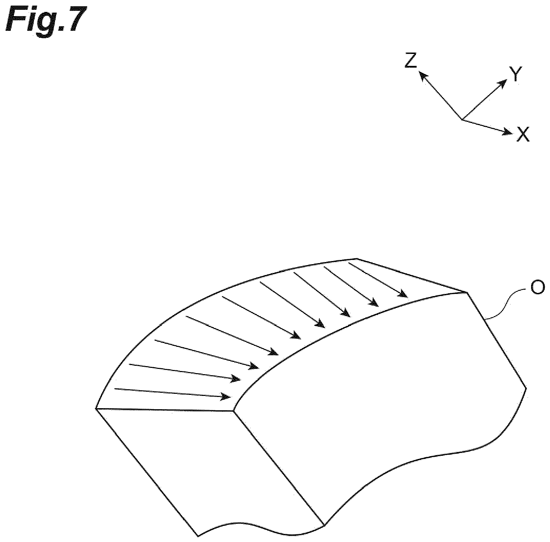

During a period for which irradiation with the beam is performed along one irradiation path, one or both of the scanning speed and the beam intensity of the beam may be changed. For example, as illustrated in FIG. 7, depending on an angle formed by the contour with respect to a Z direction (stacking direction), one or both of the scanning speed and the beam intensity of the beam may be changed during the period for which irradiation with the beam is performed along one irradiation path. Heat dissipation paths for releasing heat are limited in an overhanging portion formed at a protruding portion of the object O. As a result, the amount of heat during modeling is likely to be excessive. In such a portion, the scanning speed of the beam is increased or the beam intensity is weakened. As a result, since the concentration of heat is suppressed, optimization can be achieved.

### Reference Signs List

1: three-dimensional modeling device, 2: beam emitting unit, 3: modeling unit, 4: control unit, 21: electron gun unit, 22: aberration coil, 23: focus coil, 24: deflection coil, 31: plate, 32: elevator, 33: powder supply mechanism, 34: hopper, A: powdered material, B: electron beam, C: contour line, M: modeling region, M1: contour portion, M2: inner portion, O: object.

## Claims

1. A three-dimensional modeling device that models a three-dimensional object by irradiating a modeling material with an energy beam to melt and stack the modeling material, the device comprising:
a beam emitting unit that emits the energy beam and irradiates the modeling material with the energy beam,
wherein the beam emitting unit irradiates the modeling material with the energy beam while scanning the energy beam in a direction orthogonal to a contour line of a modeling region in at least a contour portion of the modeling region that is a cross-section of the object.

2. The three-dimensional modeling device according to claim 1,
wherein the beam emitting unit irradiates the modeling material with the energy beam while scanning the energy beam along a certain direction in an inner portion formed inside the contour portion of the modeling region.

3. The three-dimensional modeling device according to claim 1 or 2,
wherein the beam emitting unit irradiates a plurality of irradiation paths set in the contour portion with the energy beam, and irradiate another irradiation path with the energy beam by skipping over the adjacent irradiation path after irradiating the irradiation path with the energy beam.

4. The three-dimensional modeling device according to claim 1 or 2,
wherein the beam emitting unit irradiates a plurality of irradiation paths set in the contour portion with the energy beam, and after irradiating the irradiation path with the energy beam, provides an idle time, and then irradiates the adjacent irradiation path with the energy beam by skipping over the adjacent irradiation path, or irradiates the adjacent irradiation path with the energy beam.

5. The three-dimensional modeling device according to any one of claims 1 to 4,
wherein the beam emitting unit irradiates a plurality of irradiation paths set in the contour portion with the energy beam, and irradiates each of the plurality of irradiation paths with the energy beam in the same direction.

6. A three-dimensional modeling method for modeling a three-dimensional object by irradiating a modeling material with an energy beam to melt and stack the modeling material, the method comprising:
an irradiation step of emitting the energy beam and irradiating the modeling material with the energy beam,
wherein in the irradiation step, the modeling material is irradiated with the energy beam while scanning the energy beam in a direction orthogonal to a contour line of a modeling region in at least a contour portion of the modeling region that is a cross-section of the object.

## Amended claims

### Amended claims under Art. 19.1 PCT

1. (Amended) A three-dimensional modeling device that models a three-dimensional object by irradiating a modeling material with an energy beam to melt and stack the modeling material, the device comprising:
a beam emitting unit that emits the energy beam and that irradiates the modeling material with the energy beam,
wherein the beam emitting unit irradiates the modeling material with the energy beam while scanning the energy beam in a direction orthogonal to a contour line of a modeling region in at least a contour portion of the modeling region that is a cross-section of the object to model the contour portion of the object.

2. The three-dimensional modeling device according to claim 1,
wherein the beam emitting unit irradiates the modeling material with the energy beam while scanning the energy beam along a certain direction in an inner portion formed inside the contour portion of the modeling region.

3. The three-dimensional modeling device according to claim 1 or 2,
wherein the beam emitting unit irradiates a plurality of irradiation paths set in the contour portion with the energy beam, and irradiate another irradiation path with the energy beam by skipping over the adjacent irradiation path after irradiating the irradiation path with the energy beam.

4. The three-dimensional modeling device according to claim 1 or 2,
wherein the beam emitting unit irradiates a plurality of irradiation paths set in the contour portion with the energy beam, and after irradiating the irradiation path with the energy beam, provides an idle time, and then irradiates the adjacent irradiation path with the energy beam by skipping over the adjacent irradiation path, or irradiates the adjacent irradiation path with the energy beam.

5. The three-dimensional modeling device according to any one of claims 1 to 4,
wherein the beam emitting unit irradiates a plurality of irradiation paths set in the contour portion with the energy beam, and irradiates each of the plurality of irradiation paths with the energy beam in the same direction.

6. (Amended) A three-dimensional modeling method for modeling a three-dimensional object by irradiating a modeling material with an energy beam to melt and stack the modeling material, the method comprising:
an irradiation step of emitting the energy beam and irradiating the modeling material with the energy beam,
wherein in the irradiation step, the modeling material is irradiated with the energy beam while scanning the energy beam in a direction orthogonal to a contour line of a modeling region in at least a contour portion of the modeling region that is a cross-section of the object to model the contour portion of the object.
